# EUROPEAN PATENT APPLICATION

(11) **EP 4 456 593 A1**
(43) Date of publication of application: **30.10.2024**
(21) Application number: 21968823.1
(22) Date of filing: 20.12.2021
(51) Int. Cl.: H04W 24/02, H04W 28/18

(54) **NETWORK NODE**

(71) Applicant: NTT DOCOMO, INC., Tokyo 100-6150 (JP)
(72) Inventor: MINOKUCHI, Atsushi, Tokyo 100-6150 (JP); SAMA, Malla Reddy, 80687 Munich (DE)
(74) Representative: Hoffmann Eitle
(86) International application number: PCT/JP2021/047149
(87) International publication number: WO 2023/119386

(57) **Abstract**

A network node includes: a reception unit configured to receive, from a first network node, information indicating a terminal or a terminal group that is a target of guaranteeing of resource allocation, requirements of the resource allocation, and a handling policy; and a control unit configured to identify an NF (Network Function) instance that accommodates the terminal or the terminal group. The control unit performs enhancement of a resource of the NF instance based on the handling policy in a case where a state is recognized in which there is a risk that the resource allocation cannot be guaranteed.

## Description

### FIELD OF THE INVENTION

The present invention relates to a network node in a communication system.

### BACKGROUND OF THE INVENTION

In 3GPP (3rd Generation Partnership Project), in order to achieve further larger system capacity, further faster data transmission speed, further lower latency in a wireless communication section, etc., a wireless communication method called 5G or NR (New Radio) has been discussed (hereinafter, the wireless communication method is referred to as "5G" or "NR"). In 5G, various wireless technologies have been discussed in order to meet requirements including latency equal to or less than 1 ms in a wireless section while realizing a throughput equal to or greater than 10 Gbps.

In NR, an architecture is being discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (for example, non-patent document 1 and non-patent document 2).

### Citation List

### Non-Patent Document

Non-Patent Document 1: 3GPP TS 23.501 V17.2.0 (2021-09)
Non-Patent Document 2: 3GPP TS 23.502 V17.2.1 (2021-09)
Non-Patent Document 3: 3GPP TS 28.527 V16.0.0 (2020-07)
Non-Patent Document 4: 3GPP TS 28.533 V17.0.0 (2021-09)
Non-Patent Document 5: 3GPP TS 28.104 V0.3.0 (2021-11)

### SUMMARY OF THE INVENTION

### TECHNICAL PROBLEM

A subscriber uses a resource in the network. The resource is, for example, a QoS (Quality of Service) flow, a computing resource, or the like. With respect to the use of the resource, a PCF (Policy Control Function) performs policy determination, but the PCF cannot guarantee the resource of the subscriber in the QoS flow, for example. In addition, with respect to the use of resources, a function of providing LCM (Life Cycle Management) services, an interface, and the like, are defined in the OAM (Operations, Administration and Maintenance) domain. However, the function of providing LCM (Life Cycle Management) services, an interface, and the like, cannot perform a resource control with a granularity that can sufficiently support the resource allocation to a subscriber or a subscriber group.

The present invention has been made in view of the above points, and it is an object of the present invention to guarantee the resource on the network used by a subscriber.

### SOLUTION TO PROBLEM

According to the disclosed technique, a network node is provided. The network node includes: a reception unit configured to receive, from a first network node, information indicating a terminal or a terminal group that is a target of guaranteeing of resource allocation, requirements of the resource allocation, and a handling policy; and a control unit configured to identify an NF (Network Function) instance that accommodates the terminal or the terminal group. The control unit performs enhancement of a resource of the NF instance based on the handling policy in a case where a state is recognized in which there is a risk that the resource allocation cannot be guaranteed.

### ADVANTAGEOUS EFFECTS OF INVENTION

According to the disclosed technique, the resource on the network used by a subscriber can be guaranteed.

### BRIEF DESCRIPTION OF THE DRAWINGS

[Fig. 1] is a drawing for describing an example of a communication system.
[Fig. 2] is a drawing for describing an example of a communication system under a roaming environment.
[Fig. 3] is a sequence diagram for describing an example (1) of guaranteeing of the resource allocation in an embodiment of the present invention.
[Fig. 4] is a sequence diagram for describing an example (2) of guaranteeing of the resource allocation in an embodiment of the present invention.
[Fig. 5] is a sequence diagram for describing an example (3) of guaranteeing of the resource allocation in an embodiment of the present invention.
[Fig. 6] is a drawing illustrating an example of a functional configuration of a base station 10 in an embodiment of the present invention.
[Fig. 7] is a drawing illustrating an example of a functional configuration of a terminal 20 in an embodiment of the present invention.
[Fig. 8] is a drawing illustrating an example of a hardware structure of the base station 10 and the terminal 20 in an embodiment of the present invention.
[Fig. 9] is a drawing illustrating an example of a structure of a vehicle 2001 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Further, in an embodiment of the present invention, the expression, radio parameters are "configured" may mean that a predetermined value is pre-configured, or may mean that a radio parameter indicated by a network node 30 or a terminal 20 is configured.

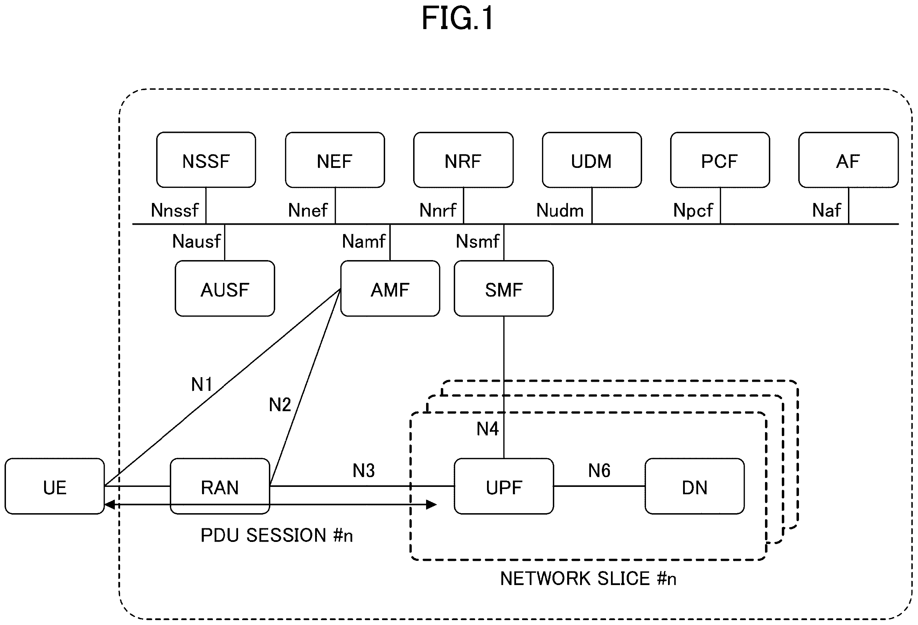

Fig. 1 is a drawing illustrating an example of a communication system. As illustrated in Fig. 1, the communication system includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN (Radio Access Network) is a network node 30 with wireless access functions, may include a base station 10, and is connected to UE, AMF (Access and Mobility Management Function) and UPF (User plane function). The AMF is a network node 30 having functions of, for example, terminating the RAN interface, terminating the NAS (Non-Access Stratum), managing registration, managing connection, managing reachability, and managing mobility. The UPF is a network node 30 interconnected with DN (Data Network), and has functions such as a PDU (Protocol Data Unit) session point to an external unit, routing and forwarding packets, and QoS (Quality of Service) handling of the user plane. UPF and DN are included in a network slice. In a wireless communication network in an embodiment of the present invention, multiple network slices may be included.

AMF is connected to UE, RAN, SMF (Session Management Function), NSSF (Network Slice Selection Function), NEF (Network Exposure Function), NRF (Network Repository Function), UDM (Unified Data Management), AUSF (Authentication Server Function), PCF (Policy Control Function), and AF (Application Function). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

The SMF is a network node 30 having functions such as session management, Internet Protocol (IP) address assignment and management of UE, DHCP (Dynamic Host Configuration Protocol) function, ARP (Address Resolution Protocol) proxy, and roaming function. The NEF is a network node 30 having a function of indicating capabilities and events to other NFs (Network Functions). The NSSF is a network node 30 having functions of, for example, selecting the network slice to which the UE is to be connected, determining the allowed NSSAI (Network Slice Selection Assistance Information), determining the configured NSSAI, and determining the AMF set to which the UE is to be connected. PCF is a network node 30 having a function of performing policy control of the network. AF is a network node 30 having a function of controlling an application server. NRF is a network node 30 having a function of discovering NF instances which provide services. UDM is a network node 30 that manages subscriber data and authentication data. UDM is connected to UDR (User Data Repository) that stores the above-described data;

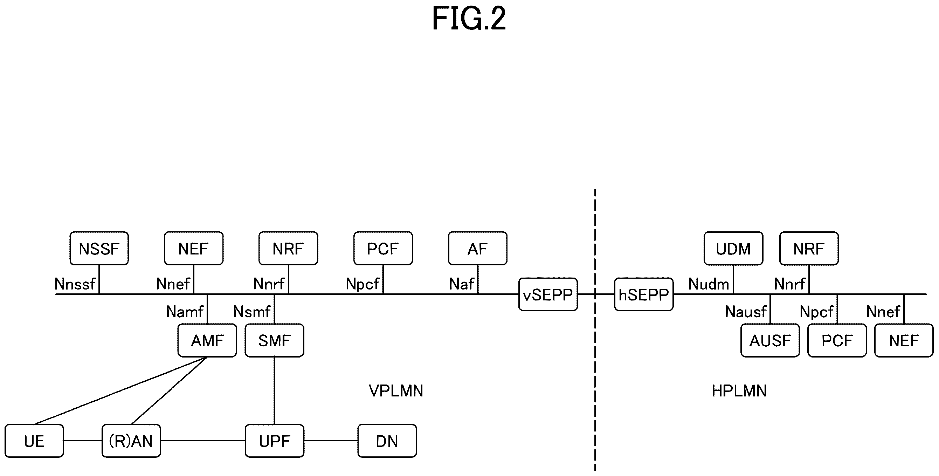

Fig. 2 is a drawing illustrating an example of a communication system under a roaming environment. As illustrated in Fig. 2, the network includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN is a network node 30 having a wireless access function, and is connected to UE, AMF and UPF. AMF is a network node 30 having functions of, for example, terminating the RAN interface, terminating NAS, managing registration, managing connection, managing reachability, and managing mobility. UPF is a network node 30 having functions of, for example, PDU session point to an external unit mutually connected to DN, routing and forwarding of packets, and QoS handling of the user plane. UPF and DN are included in a network slice. In a wireless communication network in an embodiment of the present invention, multiple network slices are included.

AMF is connected to UE, RAN, SMF, NSSF, NEF, NRF, UDM, AUSF, PCF, AF, and SEPP (Security Edge Protection Proxy). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

SMF is a network node 30 having functions such as session management, IP address assignment and management of UE, a DHCP function, an ARP proxy, and a roaming function. NEF is a network node 30 having a function of indicating capabilities and events to other NFs. NSSF is a network node 30 having functions of, for example, selecting the network slice to which the UE is to be connected, determining NSSAI to be allowed, determining NSSAI to be configured, and determining AMF set to which the UE is to be connected. PCF is a network node 30 having a function of performing policy control of the network. AF is a network node 30 having a function of controlling an application server. NRF is a network node 30 having a function of discovering NF instances which provide services. SEPP is a non-transparent proxy and filters control plane messages between PLMNs (Public Land Mobile Networks). vSEPP shown in Fig. 2 is a SEPP in a visited network, and hSEPP is a SEPP in a home network.

As shown in Fig. 2, the UE is in a roaming environment connected to RAN and AMF in VPLMN (Visited PLMN). VPLMN and HPLMN (Home PLMN) are connected via vSEPP and hSEPP. The UE can communicate with the UDM of HPLMN via, for example, the AMF of VPLMN.

Here, a subscriber uses a resource in the network. The resource is, for example, a QoS (Quality of Service) flow, a computing resource, or the like.

With respect to the use of a resource by a subscriber, the PCF performs policy determination. For example, in the GBR (Guaranteed Bit Rate) - QoS flow, even if the NG-RAN or NWDAF (Network data analytics function) indicates, to the PCF, that the QoS is jeopardized, the PCF is only capable of lowering the QoS level by using the alternative QoS mechanism, and thus, is incapable of guaranteeing the QoS. In addition, with respect to the computing resource, the PCF is expected to be incapable of guaranteeing the container capability capacity in the same manner as in a case of the QoS flow. The allocated resource is jeopardized in accordance with the resource movement accompanied by the terminal movement, for example. It is to be noted that something is jeopardized may mean that a target is jeopardized due to an occurrence of an event or a situation change. "A resource is jeopardized" may mean a state in which there is a risk that the resource cannot be guaranteed, maintained, or ensured, and may mean a state in which there is a risk that the QoS cannot be guaranteed, for example.

In addition, with respect to the resource use by a subscriber group (for example, flock QoS), the PCF performs policy determination. The PCF performs smoothing of the resource use among the subscribers. However, the PCF cannot cope with a case in which the entire resource of the subscriber group is exhausted.

In addition, with respect to the use of resources, a function of providing LCM (Life Cycle Management) services, an interface, and the like, are defined in the OAM (Operations, Administration and Maintenance) domain. In the conventional technical specification, Os-Ma-nfvo and Ve-Vnfm-em are defined as interfaces (refer to non-patent document 3), and NFVO (Network Functions Virtualization Orchestration) and VNFM (Virtual Network Function Manager) are defined as related functions (refer to non-patent document 4). However, these interfaces and functions are not capable of performing a resource control with a granularity that can sufficiently support the resource allocation to a subscriber or a subscriber group.

Therefore, a new MsNF (Management service Network Function or Management service NF) may be introduced within a range of resources that can be operated by using cloud technologies (for example, CPU, I/O band, or the like), wherein the new MsNF provides LCM services with a resource granularity to be applied to a subscriber or a subscriber group (for example, QoS flow granularity, QoS flow group granularity, container capability capacity granularity, or the like). It is to be noted that the name of MsNF is just an example, and may be a different name.

The MsNF may be located in the OAM domain. The PCF performs guaranteeing of the resource allocation (for example, guaranteeing of QoS, guaranteeing of flock QoS, guaranteeing of container capability capacity, or the like) by cooperating with the MsNF. The MsNF can enhance the cooperation between the network C-plane and OAM by using cloud technologies.

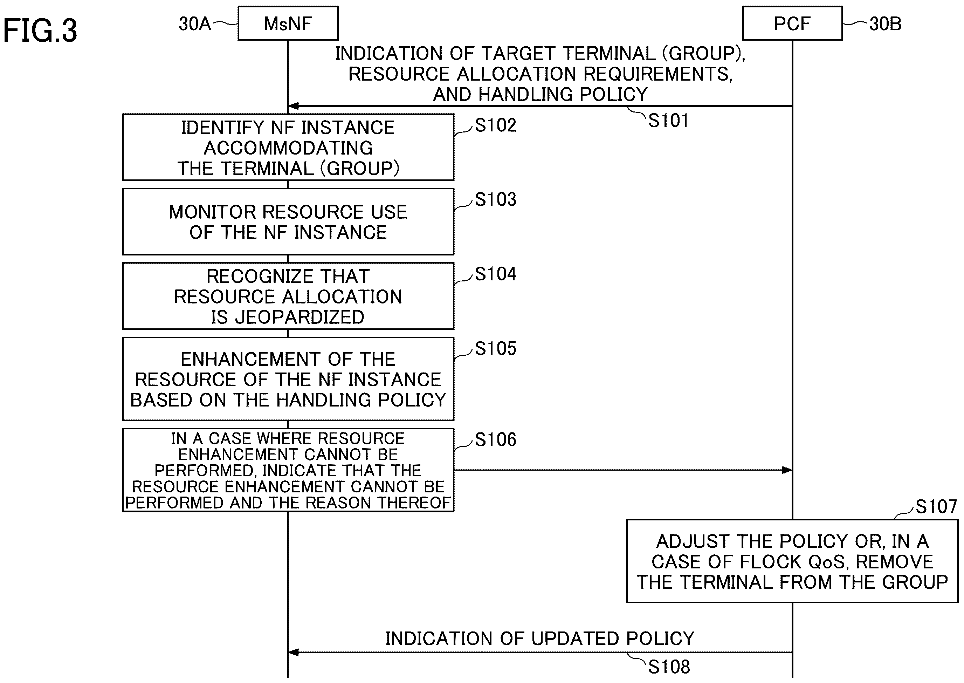

Fig. 3 is a sequence diagram for describing an example (1) of guaranteeing of the resource allocation in an embodiment of the present invention. In step S 101, the PCF 30B indicates a target terminal or target terminal group, resource allocation requirements, and a handling policy to the MsNF 30A. In subsequent step S102, the MsNF 30A identifies an NF instance that accommodates the terminal or the terminal group.

In subsequent step S103, the MsNF 30A monitors the resource use by the NF instance. In subsequent step S104, the MsNF 30A recognizes that the resource allocation is jeopardized. In subsequent step S105, the MsNF 30A enhances the resource of the NF instance based on the indicated handling policy. It is to be noted that, in step S105, the MsNF 30A may allocate a resource allocated to a terminal to another terminal depending on the handling policy.

In subsequent step S106, in a case where the resource enhancement cannot be performed, the MsNF 30A indicates, to the PCF 30B, information indicating that the resource of the NF instance cannot be enhanced and the reason thereof.

In subsequent step S107, the PCF 30B may adjust the handling policy or may remove the target terminal from the group in a case of flock QoS. In subsequent step S108, the PCF 30B indicates the updated handling policy to the MsNF 30A.

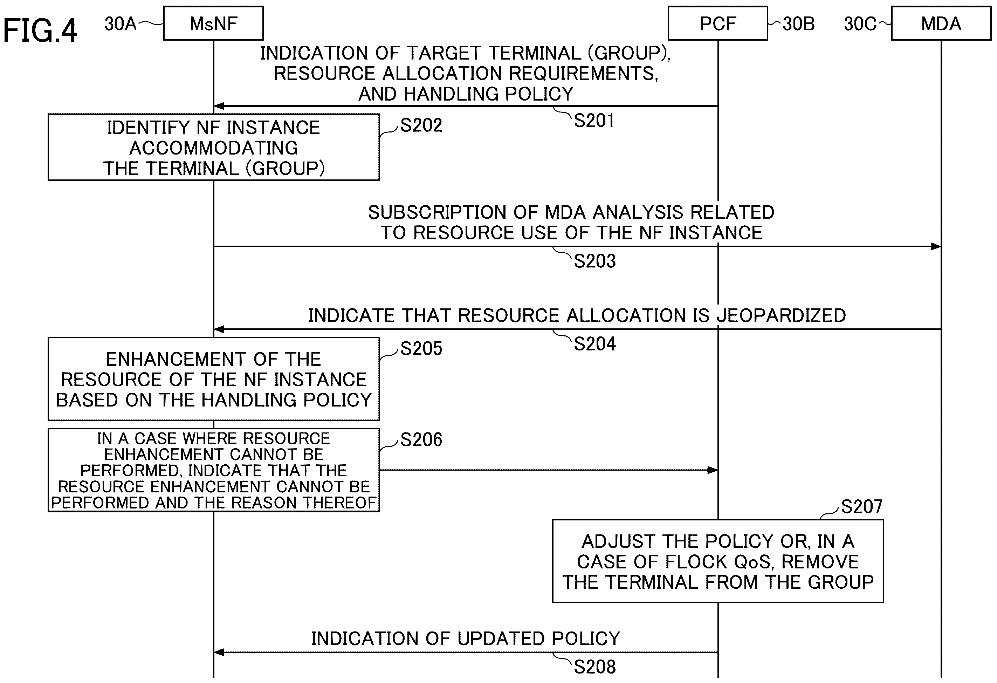

Fig. 4 is a sequence diagram for describing an example (2) of guaranteeing of the resource allocation in an embodiment of the present invention. In step S201, the PCF 30B indicates a target terminal or target terminal group, resource allocation requirements, and a handling policy to the MsNF 30A. In subsequent step S202, the MsNF 30A identifies an NF instance that accommodates the terminal or the terminal group.

In subsequent step S203, the MsNF 30A indicates, to the MDA 30C, that the MsNF 30A subscribes to the MDA (Management Data Analytics) analysis related to the resource use by the NF instance (refer to non-patent document 5). In subsequent step S204, the MsNF 30A receives an indication indicating that the resource allocation is jeopardized from the MDA 30C. In subsequent step S205, the MsNF 30A enhances the resource of the NF instance based on the handling policy. It is to be noted that, in step S205, the MsNF 30A may allocate a resource allocated to a terminal to another terminal depending on the handling policy.

In subsequent step S206, in a case where the resource enhancement cannot be performed, the MsNF 30A indicates, to the PCF 30B, information indicating that the resource of the NF instance cannot be enhanced and the reason thereof.

In subsequent step S207, the PCF 30B may adjust the handling policy or may remove the target terminal from the group in a case of flock QoS. In subsequent step S208, the PCF 30B indicates the updated handling policy to the MsNF 30A.

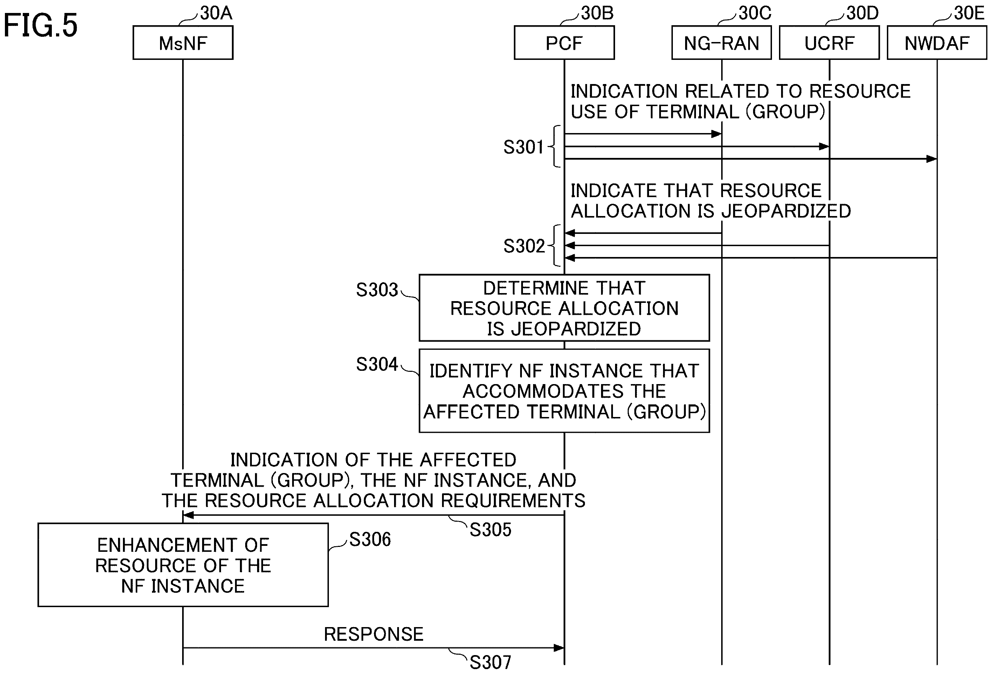

Fig. 5 is a sequence diagram for describing an example (3) of guaranteeing of the resource allocation in an embodiment of the present invention. In step S301, the PCF 30B transmits an indication related to the resource use by a terminal or a terminal group to at least one of the NG-RAN 30C, UCRF 30D, or NWDAF 30E. It is to be noted that the UCRF (User Computing Resource Function) may be a function in which a container is configurable for each subscriber. In addition, the PCF 30B may indicate, to the NWDAF 30E, that the PCF 30B subscribes to the analysis related to the resource use by a terminal or a terminal group.

In step S302, the PCF 30B receives an indication indicating that the resource allocation is jeopardized from at least one of the NG-RAN 30C, UCRF 30D, or NWDAF 30E. In subsequent step S303, the PCF 30B determines that the resource allocation is jeopardized. In subsequent step S304, the PCF 30B identifies an NF instance that accommodates the affected terminal or terminal group.

In subsequent step S305, the PCF 30B indicates the affected terminal or terminal group, the NF instance, and the resource allocation requirements. In subsequent step S306, the MsNF 30A enhances the resource of the NF instance based on the indicated resource allocation requirements. In subsequent step S307, the MsNF 30A transmits a response to the PCF 30B.

According to the above-described embodiments, the detection of the resources allocated to a terminal or a terminal group being jeopardized can be performed, the enhancement of the resources of the NF instance that accommodates the terminal or terminal group can be performed, and the guaranteeing of the resources allocated to the terminal or the terminal group can be performed.

In other words, the resources on the network used by a subscriber can be guaranteed.

### (Device configuration)

Next, a functional configuration example of the base station 10, network node 30 and the terminal 20 that perform processes and operations described above will be described. The base station 10, the network node 30 and the terminal 20 include functions for implementing the embodiments described above. It should be noted, however, that each of the base station 10, the network node 30 and the terminal 20 may include only some of the functions in the embodiments.

### <Base station 10 and network node 30>

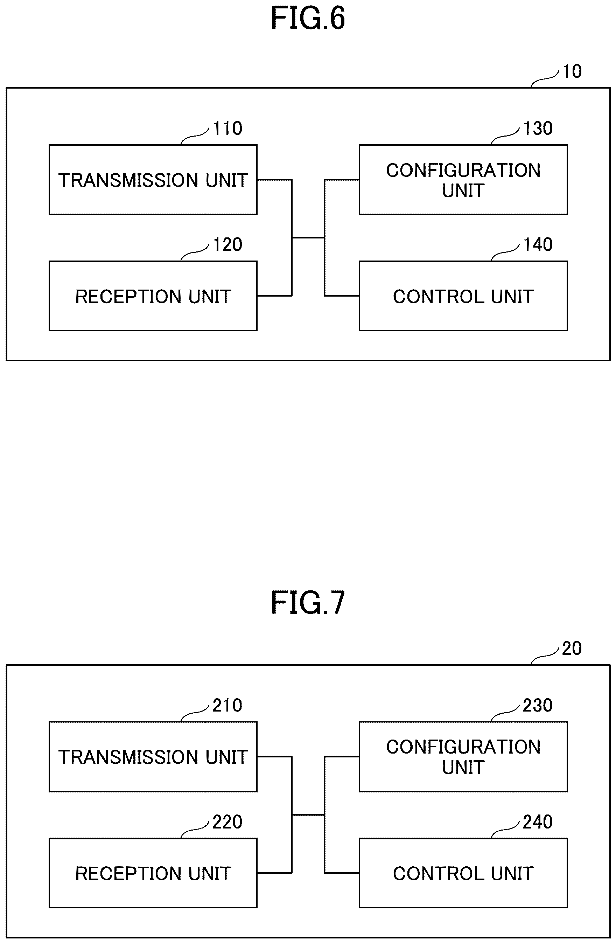

Fig. 6 is a diagram illustrating an example of a functional configuration of the base station 10. As shown in Fig. 6, the base station 10 includes a transmission unit 110, a reception unit 120, a configuration unit 130, and a control unit 140. The functional configuration illustrated in Fig. 6 is merely an example. Functional divisions and names of functional units may be anything as long as operations according to an embodiment of the present invention can be performed. Note that the network node 30 may have the same functional configuration as the base station 10. In addition, the network nodes 30 having multiple different functions in the system architecture may be composed of multiple network nodes 30 separated for each function.

The transmission unit 110 includes a function for generating a signal to be transmitted to the terminal 20 or to another network node 30 and transmitting the signal in a wired manner or wireless manner. The reception unit 120 includes a function for receiving various signals transmitted from the terminal 20 or another network node 30, and for acquiring, for example, information of an upper layer from the received signals.

The configuration unit 130 stores preset configuration information and various configuration information items to be transmitted to the terminal 20 in a storage apparatus and reads the preset configuration information from the storage apparatus as necessary. Contents of the configuration information are, for example, configurations related to the resource allocation.

The control unit 140 performs a process related to a network slice in the network as described in the embodiments. Further, the control unit 140 performs a process related to communications with the terminal 20. The functional units related to signal transmission in the control unit 140 may be included in the transmission unit 110, and the functional units related to signal reception in the control unit 140 may be included in the reception unit 120.

### <Terminal 20>

Fig. 7 is a diagram illustrating an example of a functional configuration of the terminal 20. As shown in Fig. 7, the terminal 20 includes a transmission unit 210, a reception unit 220, a configuration unit 230, and a control unit 240. The functional configuration illustrated in Fig. 7 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function of receiving NR-PSS, NR-SSS, NR-PBCH, DL/UL control signals, or reference signals transmitted from the network node 30.

The configuration unit 230 stores various types of configuration information received from the network node 30 by the reception unit 220 in the storage device and reads the configuration information from the storage device as necessary. In addition, the configuration unit 230 also stores pre-configured configuration information. Contents of the configuration information are, for example, configurations related to the resource allocation.

The control unit 240 performs a process related to the connection control to the network and the network slice as described in the embodiments. The functional units related to signal transmission in the control unit 240 may be included in the transmission unit 210, and the functional units related to signal reception in the control unit 240 may be included in the reception unit 220.

### (Hardware structure)

In the above block diagrams used for describing an embodiment of the present invention (Fig. 6 and Fig. 7), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

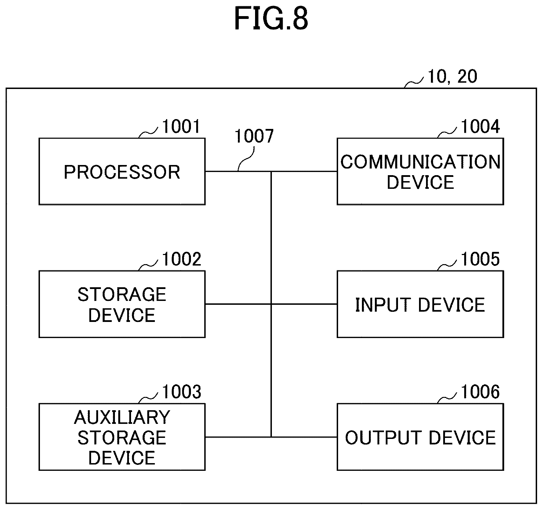

For example, the network node 30, terminal 20, etc., according to an embodiment of the present disclosure may function as a computer for processing the radio communication method of the present disclosure. Fig. 8 is a drawing illustrating an example of hardware structures of the base station 10 and the terminal 20 according to an embodiment of the present invention. The network node 30 may have the same hardware configuration as the base station 10. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may be configured without including some of the devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading or writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 6 may be realized by control programs that are stored in the storage device 1002 and are executed by the processor 1001. Further, for example, the control unit 240 of the terminal 20 illustrated in Fig. 7 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

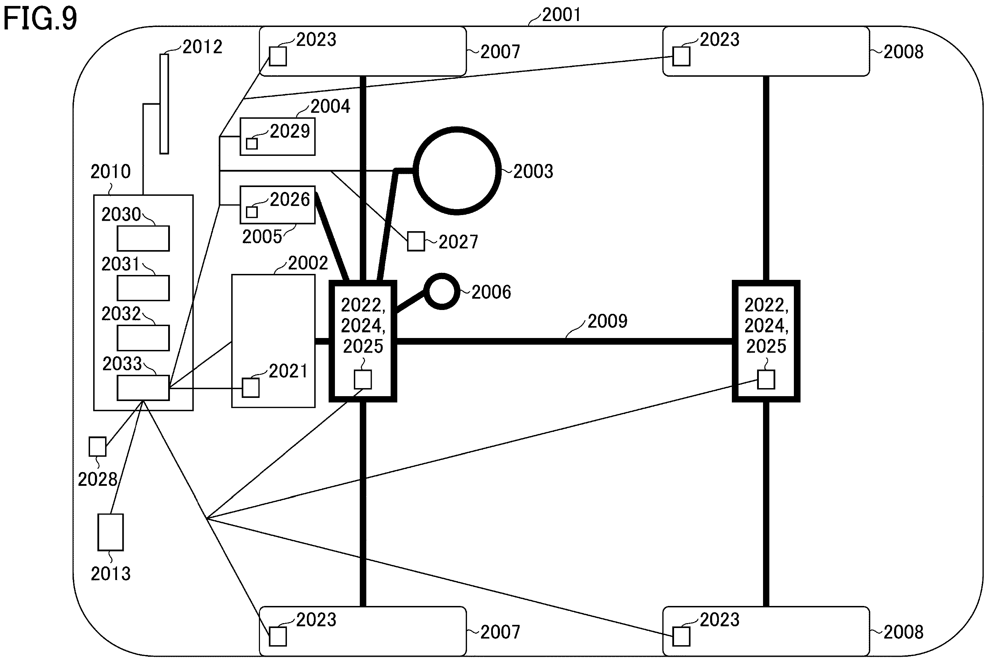

Fig. 9 shows an example of a configuration of a vehicle 2001. As shown in Fig. 9, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a network node is provided. The network node includes: a reception unit configured to receive, from a first network node, information indicating a terminal or a terminal group that is a target of guaranteeing of resource allocation, requirements of the resource allocation, and a handling policy; and a control unit configured to identify an NF (Network Function) instance that accommodates the terminal or the terminal group. The control unit performs enhancement of a resource of the NF instance based on the handling policy in a case where a state is recognized in which there is a risk that the resource allocation cannot be guaranteed.

According to the above-configuration, the detection of the resources allocated to a terminal or a terminal group being jeopardized can be performed, the enhancement of the resources of the NF instance that accommodates the terminal or terminal group can be performed, and the guaranteeing of the resources allocated to the terminal or the terminal group can be performed. In other words, the resources on the network used by a subscriber can be guaranteed.

The control unit may monitor a resource use by the NF instance and may recognize a state in which there is a risk that the resource allocation cannot be guaranteed. According to the above-described configuration, the detection of the resources allocated to a terminal or a terminal group being jeopardized can be performed, the enhancement of the resources of the NF instance that accommodates the terminal or terminal group can be performed, and the guaranteeing of the resources allocated to the terminal or the terminal group can be performed.

The reception unit may receive an analysis related to the resource use by the NF instance from a second network node, and the control unit may recognize a state in which there is a risk that the resource allocation cannot be guaranteed. According to the above-described configuration, the detection of the resources allocated to a terminal or a terminal group being jeopardized can be performed, the enhancement of the resources of the NF instance that accommodates the terminal or terminal group can be performed, and the guaranteeing of the resources allocated to the terminal or the terminal group can be performed.

The network node may further include a transmission unit configured to transmit information indicating that the enhancement of the resource of the NF instance cannot be performed and a reason why the enhancement of the resource of the NF instance cannot be performed to the first network node in a case where the enhancement of the resource of the NF instance cannot be performed by the control unit. According to the above-described configuration, the detection of the resources allocated to a terminal or a terminal group being jeopardized can be performed, the enhancement of the resources of the NF instance that accommodates the terminal or terminal group can be performed, and the guaranteeing of the resources allocated to the terminal or the terminal group can be performed.

The reception unit may receive an updated handling policy from the first network node after the information indicating that the enhancement of the resource of the NF instance cannot be performed and the reason why the enhancement of the resource of the NF instance cannot be performed are transmitted by the transmission unit to the first network node. According to the above-described configuration, the detection of the resources allocated to a terminal or a terminal group being jeopardized can be performed, the enhancement of the resources of the NF instance that accommodates the terminal or terminal group can be performed, and the guaranteeing of the resources allocated to the terminal or the terminal group can be performed.

In addition, according to an embodiment of the present invention, a network node is provided. The network node includes: a transmission unit configured to transmit an indication related to resource allocation of a terminal or a terminal group to a first network node; a reception unit configured to receive information indicating a state in which there is a risk that the resource allocation cannot be guaranteed from the first network node; and a control unit configured to identify an NF (Network Function) instance that accommodates the terminal or the terminal group. The transmission unit transmits information indicating the terminal or the terminal group, the NF instance, and requirements of the resource allocation to a second network node.

According to the above-configuration, the detection of the resources allocated to a terminal or a terminal group being jeopardized can be performed, the enhancement of the resources of the NF instance that accommodates the terminal or terminal group can be performed, and the guaranteeing of the resources allocated to the terminal or the terminal group can be performed. In other words, the resources on the network used by a subscriber can be guaranteed.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, each of the network node 30 and the terminal 20 has been described by using functional block diagrams. However, the apparatuses may be implemented by hardware, software, or a combination of hardware and software. The software executed by a processor included in the network node 30 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE or LTE-A combined with 5G, etc.).

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the network node 30 in the present specification, may be performed by an upper node in some cases. In a network including one or more network nodes including the network node 30, it is apparent that various operations performed for communicating with the terminal 20 may be performed by at least one of the network node 30 and another network node other than the network node 30 (for example, but not limited to, MME or S-GW). According to the above, a case is described in which there is another single network node other than the network node 30. However, the other network node may be a combination of multiple other network nodes (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, and each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, a function of the network node 30 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, in a case where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Network node
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A network node comprising:
a reception unit configured to receive, from a first network node, information indicating a terminal or a terminal group that is a target of guaranteeing of resource allocation, requirements of the resource allocation, and a handling policy; and
a control unit configured to identify an NF (Network Function) instance that accommodates the terminal or the terminal group, wherein
the control unit performs enhancement of a resource of the NF instance based on the handling policy in a case where a state is recognized in which there is a risk that the resource allocation cannot be guaranteed.

2. The network node as claimed in claim 1, wherein
the control unit monitors a resource use by the NF instance and recognizes a state in which there is a risk that the resource allocation cannot be guaranteed.

3. The network node as claimed in claim 1, wherein
the reception unit receives an analysis related to the resource use by the NF instance from a second network node, and
the control unit recognizes a state in which there is a risk that the resource allocation cannot be guaranteed, based on the analysis.

4. The network node as claimed in claim 1, further comprising:
a transmission unit configured to transmit information indicating that the enhancement of the resource of the NF instance cannot be performed and a reason why the enhancement of the resource of the NF instance cannot be performed to the first network node in a case where the enhancement of the resource of the NF instance cannot be performed by the control unit.

5. The network node as claimed in claim 4, wherein
the reception unit receives an updated handling policy from the first network node after the information indicating that the enhancement of the resource of the NF instance cannot be performed and the reason why the enhancement of the resource of the NF instance cannot be performed are transmitted by the transmission unit to the first network node.

6. A network node comprising:
a transmission unit configured to transmit an indication related to resource allocation of a terminal or a terminal group to a first network node;
a reception unit configured to receive information indicating a state in which there is a risk that the resource allocation cannot be guaranteed from the first network node; and
a control unit configured to identify an NF (Network Function) instance that accommodates the terminal or the terminal group, wherein
the transmission unit transmits information indicating the terminal or the terminal group, the NF instance, and requirements of the resource allocation to a second network node.
